Europäisches Patentamt

European Patent Office

Office européen des brevets

(11) Veröffentlichungsnummer: **0 339 522**
**A2**

# EUROPÄISCHE PATENTANMELDUNG

(21) Anmeldenummer: **89107288.6**

(22) Anmeldetag: **22.04.89**

(51) Int. Cl.⁴: **C08F 220/10 , C09J 3/14 ,**
**//(C08F220/10,220:28),**
**(C08F220/10,220:34),**
**(C08F220/10,220:38)**

(30) Priorität: **27.04.88 DE 3814125**

(43) Veröffentlichungstag der Anmeldung:
**02.11.89 Patentblatt 89/44**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Rehmer, Gerd, Dr.**
**Koenigsberger Strasse 1**
**D-6712 Bobenheim-Roxheim(DE)**
Erfinder: **Druschke, Wolfgang, Dr.**
**Berliner Strasse 28**
**D-6716 Dirmstein(DE)**
Erfinder: **Auchter, Gerhard, Dr.**
**Paray-Le-Monial-Strasse 10**
**D-6702 Bad Duerkheim(DE)**

(54) **Mit ultravioletter Strahlung vernetzbare Zusammensetzung zur Herstellung von Haftklebebeschichtungen.**

(57) Die vorliegende Erfindung betrifft eine mit ultravioletter Strahlung vernetzbare Zusammensetzung zur Herstellung von Überzügen, insbesondere von Haftklebebeschichtungen, enthaltend

A) 80 bis 99,99 Gew.% mindestens eines Copolymerisats, das 1 bis 30 Gew.% $\alpha,\beta$-monoolefinisch ungesättigter Monomerer mit alicyclischen Resten oder mit einem Fünf- oder Sechsring-Heterocyclus mit mindestens einem Sauerstoff- oder Schwefelatom einpolymerisiert enthält und

B) 0,01 bis 20 Gew.% einer photosensitiven Verbindung.

EP 0 339 522 A2

# Mit ultravioletter Strahlung vernetzbare Zusammensetzung zur Herstellung von Haftklebebeschichtungen

Die vorliegende Erfindung betrifft mit ultravioletter Strahlung vernetzbare Zusammensetzungen zur Herstellung von Haftklebebeschichtungen, die Copolymerisate olefinisch ungesättigter Verbindungen und eine photosensitive Verbindung enthält.

Haftklebemassen werden in steigender Menge zur Herstellung von Etiketten, Klebebändern, Dekorfolien und ähnlichen selbstklebenden flächigen Gebilden eingesetzt. Die hierfür verwendeten Haftklebemassen müssen bestimmte Eigenschaften aufweisen. Neben einer guten Oberflächenklebrigkeit soll eine möglichst hohe Kohäsion der Beschichtung gegeben sein. Der Haftkleber soll eine gute Beständigkeit gegen Licht, Luft und Feuchtigkeit besitzen und die Klebrigkeit soll über einen möglichst weiten Temperaturbereich konstant sein, d.h. bei niedrigen Temperaturen soll noch eine gute Oberflächenklebrigkeit vorhanden sein und bei hohen Temperaturen darf die Kohäsion nicht wesentlich abfallen.

Aus der niederländischen Patentanmeldung 6 606 711 sind Selbstklebebänder bekannt, die durch Überziehen eines Substrates mit einem Polyacrylat-Kleber erhalten werden, wobei mindestens ein monomeres Acrylat, z.B. Ethylhexylacrylat, oder dessen Gemisch mit einem copolymerisierbaren Monomeren oder Präpolymer/Monomer-Gemischen daraus durch UV-Bestrahlung und anschließendes Erhitzen polymerisiert werden. Nachteilig ist jedoch die notwendige Mitverwendung von haut- und augenreizenden leichtflüchtigen Monomeren. Um überhaupt gute Resultate zu erzielen, muß unter Inertgasatmosphäre belichtet werden.

Ferner ist in der niederländischen Patentanmeldung 7 009 629 ein Verfahren zur Herstellung von Klebstoffen beschrieben, bei dem Gemische aus (Meth)acrylsäureestern wie 2-Ethylhexylacrylat mit organischen Polymeren wie Cellulosederivaten, Polyolefinen und Polyestern als Viskositätsregulierungsmittel, ggf. zusammen mit einem Tackifier, wie Polyvinylmethylether, in dünner Schicht auf ein Substrat aufgebracht und mit energiereicher Strahlung behandelt werden; nachteilig an diesem Verfahren ist außer der Verwendung von reizenden leichtflüchtigen Monomeren, daß die Kohäsion für viele Anwendungen auf dem Haftklebergebiet nicht ausreicht.

In der US-PS 3 772 063 sind Klebestreifen beschrieben, bei denen die Klebeschicht durch Bestrahlen einer Masse, die mindestens einen (Meth)acrylsäureester mit 1 bis 9 Kohlenstoffatomen im Alkylrest enthält, mit ionisierender Strahlung erhalten werden. Dabei werden jedoch nur Klebeschichten mit relativ niedriger Kohäsion erhalten. Weiterhin müssen für die Beschaffung einer Anlage, die ionisierende Strahlen erzeugt, hohe Investitionen getätigt und Strahlenschutzvorkehrungen getroffen werden.

Durch Bestrahlung mit energiereichen Strahlen erhaltene Klebebänder bzw. Klebefolien mit einer hohen Scherfestigkeit des Klebers sind zwar aus der DE-AS 24 55 133 bekannt, doch müssen dabei die Klebemassen aus einem Alkyl(meth)acrylat-Polymer mit 1 bis 12 C-Atomen im Alkylrest und einem monomeren polyfunktionellen (Meth)acrylsäureester nach einem aufwendigen Verfahren hergestellt und mit Elektronenstrahlen bestrahlt werden; außer den hohen Investitionskosten für eine derartige Anlage und den Strahlenschutzvorkehrungen, muß der Bestrahlungsraum, um vorteilhafte Eigenschaften zu erzielen, mit Inertgas gespült werden.

Aus der DE-OS 23 57 486 ist ein Verfahren zur Herstellung selbsthaftender Überzüge bekannt, das dadurch gekennzeichnet ist, daß ein bei Raumtemperatur flüssiges Gemisch aus

A) mindestens einer polymerisierbaren einfach olefinisch ungesättigten Verbindung, die Polymerisate bildet, die bei Raumtemperatur klebrig sind,

B) mindestens einer mindestens zweifach ungesättigten Verbindung und

C) einem polymeren Stoff mit einem Erweichungspunkt unter 50°C, der ein durchschnittliches Molekulargewicht zwischen 500 und 10 000 aufweist, mit ionisierender Strahlung behandelt wird.

Als Monomere A) können dabei Acryl- und Methacrylsäureester von meist 4 bis 12 C-Atomen enthaltenden Alkanolen eingesetzt werden. Die nach diesem Verfahren hergestellten Klebeschichten weisen eine hohe Scherfestigkeit bei Raumtemperatur und eine gute Oberflächenklebrigkeit auf. Nachteilig ist jedoch, daß solche Klebeschichten einen relativ starken kalten Fluß und bei höheren Temperaturen ungenügende Scherfestigkeiten zeigen.

In der EP 00 88 300 wird ein Verfahren zur Herstellung selbsthaftender Überzüge beschrieben, nach dem zur Herstellung von selbsthaftenden Überzügen durch Beschichten von Trägermaterialien mit Derivaten von Dihydroxypropylacrylsäureestern im Gemisch mit Polymeren einer Glastemperatur von unter 0°C und eines K-Werts von 20 bis 80 und/oder klebrigmachenden Harzen mit energiereichen Strahlen bestrahlt. Dieses Verfahren liefert Haftkleber mit einer guten Oberflächenklebrigkeit und guter Wärmestandfestigkeit, neben dem Nachteil der Verwendung von reizenden Monomeren werden gute Resultate nur bei Bestrahlung unter Luftsauerstoffausschluß erzielt.

Aus der US-PS 2 986 507 ist eine Zusammensetzung bekannt, die aus einem unvernetzten Polyacrylat und einem "Photoinsolubilizer" besteht und die in organischen Lösungsmitteln löslich ist, nach UV-Bestrahlung aber unlöslich wird. U.a. werden diese Zusammensetzungen als Beschichtungsmittel für Metall, Holz, Papier und Kunststoff angewendet.

Aufgabe der vorliegenden Erfindung war es, einen Weg aufzuzeigen, der frei von den oben aufgeführten Nachteilen bekannter Verfahren, zu selbsthaftenden Überzügen, insbesondere Haftklebeschichten führt, die sich leicht auftragen lassen und nach der Vernetzung mit ultraviolettem Licht eine hohe Scherfestigkeit auch bei höheren Temperaturen und gute Oberflächenklebrigkeit und gute Weichmacherbeständigkeit aufweisen.

Die Aufgabe konnte gelöst werden mit einer durch ultraviolette Strahlung vernetzbaren Zusammensetzung, enthaltend

A) 80 bis 99,99 Gew.% mindestens eines Copolymerisats, das 1 bis 30 Gew.% α,β-monoolefinisch ungesättigter Monomerer mit alicyclischen Resten oder mit einem Fünf- oder Sechsring-Heterocyclus mit mindestens einem Sauerstoff- oder Schwefelatom einpolymerisiert enthält und

B) 0,01 bis 20 Gew.% einer photosensitiven Verbindung.

Zu den Aufbaukomponenten ist folgendes auszuführen:

Als Aufbaukomponente des Copolymerisats A) werden 1 bis 30 Gew.%, bevorzugt 3 bis 25 Gew.%, besonders bevorzugt 5 bis 20 Gew.% α,β-monoolefinisch ungesättigte Monomere mit alicyclischen Resten oder mit einem Fünf- oder Sechsring-Heterocyclus mit mindestens einem Sauerstoff- oder Schwefelatom oder deren Gemische verwendet.

Als α,β-monoolefinisch ungesättigte Monomere mit alicyclischen Resten eignen sich beispielsweise 3-Cyclohexylpropyl-1-(meth)acrylat, Cyclohexyl(meth)acrylat, 4-tert.-Butylcyclohexyl(meth)acrylat, Isobornyl-(meth)acrylat, N-Cyclohexyl(meth)acrylamid, Isobornyl(meth)acrylat, N-Isobornyl(meth)acrylamid, N-Adamantyl(meth)acrylamid, N-Norbornyl(meth)acrylamid, N-(4-tert.-Butyl)cyclohexylacrylamid und Cyclopentyl(meth)acrylat.

Als α,β-monoolefinisch ungesättigte Monomere mit einem Fünf- oder Sechsring-Heterocyclus mit mindestens einem Sauerstoff- oder Schwefelatom im Ring, eignen sich beispielsweise 2-N-Morpholinoethyl-(meth)acrylat, 2-N-Morpholino-n-hexyl(meth)acrylat, N-(2-Methacryloyloxi)ethyloxazolidin, Tetrahydrofurfuryl-2-(meth)-acrylat, insbesondere aber auch die (Thio)ketale bzw. (Thio)acetale von (Meth)acrolein, Diacetonacrylamid und 2-Ketobutyl(meth)acrylat, wobei als Alkoholkomponente zur Herstellung der (Thio)ketale bzw. (Thio)acetale als Alkoholkomponente bevorzugt 1,2-Ethandiol, 2-Mercaptoethanol und 1,2-Dimercaptoethanol eingesetzt werden. Besonders bevorzugt sind 1,2-Ethandiol und 2-Mercaptoethanol. Bevorzugte copolymerisierbare Heterocyclen sind Tetrahydrofurfuryl-2-(meth)-acrylat und Tetrahydrofurfuryl-2-(meth)-acrylamid.

Die Copolymerisate A) enthalten als Aufbaukomponente weiterhin 70 bis 99 Gew.%, bevorzugt 80 bis 90 Gew.% α,β-monoolefinisch ungesättigter Verbindungen, die zu 50 bis 100 Gew.%, bevorzugt 80 bis 97,5 Gew.% aus (Meth)acrylsäureestern von Alkanolen mit 1 bis 24 C-Atomen bestehen, wie Methyl-, Ethyl-, Propyl-, n-, i- und t-Butyl-, 2-Ethylhexyl-, Decyl-, i-Amyl-, i-Octyl-, Lauryl- und Stearylacrylat und/oder -methacrylat, Vinylester 1 bis 20 C-Atome enthaltender gesättigter Carbonsäuren, wie Vinylformiat, -acetat, -propionat, -laurat und -stearat, Vinylether mit 3 bis 22 C-Atomen, wie Methyl-, Ethyl-, Butyl-, Hexyl-, Octadecylvinylether, Vinylaromaten mit 8 bis 12 C-Atomen, wie Styrol, oder ferner Methylstyrol, Vinyltoluole, tert.-Butylstyrol und Halogenstyrole, Olefine mit 2 bis 20 C-Atomen, wie Ethylen, Propylen, n- und i-Butylen, Diisobuten, Triisobuten und Oligopropylene und/oder Vinylhalogenide, wie Vinylchlorid, und Vinylidenchlorid, sowie Allylether oder Allylester. Bevorzugt werden solche Monomere verwendet, deren Homopolymerisate Glastemperaturen unter 0°C aufweisen, besonders bevorzugt solche, deren Homopolymerisate Glastemperaturen unter -10°C haben, speziell Copolymerisate des n- und iso-Butyl, sowie des 2-Ethylhexyl-, Lauryl(meth)acrylat, i-Amyl- und i-Octylacrylats und/oder Vinylester, Vinylacetat und Vinylpropionat.

Die Copolymerisate A) enthalten weiterhin 0 bis 20 Gew.%, bevorzugt 0,5 bis 10 Gew.% α,β-monoolefinisch ungesättigte Säuren. Geeignet sind z.B. Mono- und Dicarbonsäuren mit 3 bis 6 C-Atomen sowie die Monoester von 4 bis 6 C-Atomen enthaltenden Dicarbonsäuren mit 1 bis 24 C-Atome enthaltenden Alkanolen und/oder deren Anhydride, ferner olefinisch ungesättigte Sulfonsäuren und Phosphonsäuren wie Vinylsulfonsäure. Bevorzugt verwendet man (Meth)acrylsäure, Crotonsäure, Maleinsäure, Fumarsäure, Monomethyl-, -butyl-, -2-ethylhexyl- oder -stearylmaleinat und/oder Maleinsäureanhydrid, Itaconsäureanhydrid oder (Meth)acrylsäureanhydrid.

Die Copolymerisate A) können weiterhin enthalten 0 bis 10 Gew.%, bevorzugt 0,5 bis 5 Gew.%

monoolefinisch ungesättigte, basische N-Atome aufweisende Monomere, besonders tertiäre Aminoverbindungen, wie N,N-Dimethyl-, N,N-Diethylamino-ethyl-(meth)-, N,N-Diisopropyl-(meth)-, N,N-Dibutyl-(meth)-acrylamid und -(meth)acrylat, Dimethyl- und Diethylaminoethylvinylether, N-Vinylimidazol, N-Vinylimidazolin, Vinylpyridin, sowie N-substituierte Amide, in Mengen von 0 bis 15 Gew.%, bevorzugt 0,1 bis 10 Gew.%, wie Mono- und Dialkyl(meth)acrylamid, N-Vinylformamid, N-Vinylpyrrolidon, Vinylcaprolactam, p-Hydroxi(meth)-acrylsäureanilid, N-tert.-Butyl(meth)acrylamid, Diaceton(meth)acrylamid, N-(1-Methylundecyl)(meth)-acrylamid, N-Isobornyl(meth)acrylamid, N-Adamantyl(meth)acrylamid, N-Benzyl(meth)acrylamid, N-(4-Methylphenyl)methyl(meth)acrylamid, N-Diphenylmethylacrylamid, Phthalimidomethyl(meth)-acrylamid, (Meth)-acrylamidohydroxiessigsäure, (Meth)acrylamidoessigsäure, (Meth)acrylamidoessigsäureester wie (Meth)-acrylamidoessigsäuremethylester 2-(Meth)acrylamido-2-methyl-buttersäure, N,N-Bis(2-cyanoethyl)-methacrylamid, N-(1,1,1-Trihydroximethyl)methyl(meth)acrylamid und N-(3-Hydroxi-2,2-di-methylpropyl)-methacrylamid.

Bevorzugt können N-Vinylpyrrolidon und Vinylcaprolactam verwendet werden.

In Mengen von 0 bis 20 Gew.%, bevorzugt 0,1 bis 10 Gew.%, können basische N-Atome und OH-Gruppen und/oder Alkoxy-Gruppen aufweisende Monomere im Copolymerisat A) enthalten sein, wie z.B. 2-Hydroxi-3-[N,N-di(2-hydroxiethyl)]-propyl(meth)acrylat, 2-Methoxy-3-[N,N-di(2-hydroxiethyl)]propyl(meth)-acrylat, 2-Hydroxi-3-[N-hydroxiethyl-N-alkyl]propyl(meth)acrylate und/oder 2-Hydroxi-3-[N,N-dialkyl]-propylmethacrylat mit 1 bis 10 C-Atomen im Alkylrest, wie 2-Hydroxi-3-[N-hydroxiethyl-N-methyl]propyl-(meth)acrylat und 2-Hydroxi-3-[N-ethyl-N-methyl]propylmethacrylat.

Bevorzugt können 2-Ethoxyethyl(meth)acrylat und 2-Methoxyethyl(meth)acrylat verwendet werden.

Es können auch Comonomere mit weiteren funktionellen Gruppen als Aufbaukomponente für das Copolymerisat A) in Mengen von 0 bis 20 Gew.%, bevorzugt 0,1 bis 15 Gew.% mitverwendet werden, wie Mono(meth)acrylate von Diolen, Polyetherolen, ein- und mehrwertigen ethoxylierten und/oder propoxilierten Alkoholen und/oder Phenolen wie 2-Hydroxypropyl(meth)acrylat, 2-Hydroxyethyl(meth)acrylat, 2-Hydroxypropyl(meth)acrylat, 4-Hydroxybutyl(meth)acrylat oder Aronix®-Typen der Fa. Toagosei Chem. Ind. wie Aronix M-101, Aronix M-111, propoxylierte Fettalkohole mit einem Molekulargewicht von 200 bis 10 000 oder Epoxid-Gruppen enthaltende (Meth)acrylate wie Glycidylacrylat und -methacrylat.

Die Copolymerisate A) haben meist K-Werte nach DIN 53 726 (gemessen 1 gew.%ig in Tetrahydrofuran bei 25 °C) von 20 bis 150, bevorzugt von 30 bis 100, besonders bevorzugt von 50 bis 80; bzw. einen Staudinger-Index von 0,15 bis 3,0 100 ml/g.

Die Copolymerisate werden in Mengen von 80 bis 99,99 Gew.%, bevorzugt 95 bis 99,95 Gew.%, besonders bevorzugt von 96,5 bis 99,5 Gew.% verwendet, bezogen auf die Summe der Gewichte von Copolymerisat (A) und Verbindung (B).

Als photosensitive Verbindung B) werden bevorzugt aromatische Ketone eingesetzt, wie Benzophenon, Xanthon, Thioxanthon, Fluorenon, Benzil, Acenaphthenchinon sowie aromatisch/aliphatische Ketone wie Acetophenon und Propiophenon. Besonders bevorzugt sind Benzophenon und Benzophenonderivate, allein oder im Gemisch, wie 3- und 4-Hydroxibenzophenon sowie über die 4-Hydroxigruppe mit beispielsweise Decandicarbonsäure veresterte oder mit Neopentyldiisocyanat, 2-Methyl-pentylen-1,5-diisocyanat oder mit Tris(isocyanato-hexamethylen)isocyanurat urethanisierte Bisbenzophenone, Benzophenon-2-carbonsäure, Benzophenon-3-carbonsäure, Benzophenon-4-carbonsäure, 3,3',4,4'-Benzophenontetracarbonsäure und 3,3',4,4'-Benzophenontetracarbonsäuredianhydrid, 3,3',4,4'-Tetra-(tert.-butylperoxicarbonyl)-benzophenon sowie 2-, 3- und 4-Phenylbenzophenon, 2-, 3- und 4-Alkylbenzophenone mit 1 bis 10 C-Atomen im Alkylrest wie 2-, 3- und 4-Methylbenzophenon, halogenierte (Monoalkyl)benzophenone wie 4-(Trifluormethyl)-benzophenon. Geeignet ist auch das Heterocoerdianthron und dessen Endoperoxid. Des weiteren können Ketone wie 2-Acetonaphthon, 4-Aminobenzophenonhydrochlorid, -hydrogensulfat und -sulfat, sowie 4,4'-Tetramethylaminobenzophenon und dessen Mineralsäuresalze verwendet werden.

Die Menge der eingesetzten Verbindung (B) richtet sich nach dem K-Wert des Copolymerisats (A), der für die Bestrahlung eingesetzten UV-Bestrahlungsquelle und den im Copolymerisat (A) verwendeten Monomeren sowie der zu bestrahlenden Schichtdicke zur Erzielung eines optimalen Eigenschaftsniveaus. Die Verbindung (B) wird in Mengen von 0,01 bis 20 Gew.%, bevorzugt in Mengen von 0,05 bis 5 Gew.%, besonders bevorzugt in Mengen von 0,1 bis 3,5 Gew.%, bezogen auf die Summe der Gewichte von Copolymerisat (A) und Verbindung (B) eingesetzt. Mit Vorteil lassen sich auch Gemische der Verbindung (B) verwenden.

Die Verbindungen (B) können den Copolymerisaten (A) während oder nach der Polymerisation zugesetzt werden. Sie können dabei in fester, gelöster, dispergierter oder geschmolzener Form in gelösten, dispergierten oder geschmolzenen Copolymerisaten (A) zugesetzt werden. In manchen Fällen ist es von Vorteil, die Verbindung (B) schon in den olefinisch ungesättigten Monomeren, die für die Herstellung der Copolymerisate (A) eingesetzt werden, zu lösen. In der Regel werden die Verbindungen (B) den gelösten, dispergierten oder geschmolzenen Copolymerisaten (A) nach der Herstellung zugesetzt.

Das Herstellverfahren für die Copolymerisate (A) ist allgemein bekannt und kann z.B. gemäß DE-PS 25 26 747, DE-OS 30 18 131, DE-PS 24 16 691 oder EP 3516 erfolgen.

Wenngleich die erfindungsgemäßen Mittel ohne Mitverwendung zusätzlicher Lösemittel hergestellt werden können, besonders wenn die Copolymerisate (A) als wäßrige Dispersionen eingesetzt werden, so werden doch meist zusätzliche Lösemittel eines Siedebereichs von 30 bis 250 °C, wie Wasser, Alkohole, wie Methanol, Ethano, n- und i-Propanol, n-, i- und t-Butanol, Amylalkohole, Cyclohexanol, Ester, wie Methyl-, Ethyl-, Propyl-, Butylformiat und -acetat, Ether, wie Diethyl-, Dipropyl-, Dibutylether, Tetrahydrofuran, Dioxan, Glykole, wie Ethylenglykol, Propylenglykol, Butandiole, Glykolether, Methyl-, Ethyl-, Butyl-, Dimethyl-, Diethyl-, Dibutylglykol, Diglykoldiethylether, Diglykoldimethylether, Diglykolmonomethylether, Diglykolmonomethylether, Glykolester, wie Glycol(di)acetat, Etherester wie Methyl- und Ethylglykolacetat, aromatische Kohlenwasserstoffe wie Benzol, Toluol, Xylole, Ethylbenzol, Butylbenzole und Halogenbenzole, daneben Benzine des genannten Siedebereichs sowie Alkane, z.B. Pentan, Hexan, Octan oder auch Dimethylformamid mitverwendet.

Für Haftkleber werden bevorzugt Lösemittel eines Siedebereichs von 50 bis 150 °C verwendet, die daneben noch kleine Anteile höher- und/oder niedrigsiedender Komponenten enthalten können. Bevorzugt setzt man Kohlenwasserstoffe wie Toluol, besonders bevorzugt Benzine eines Siedebereichs von 60 bis 120 °C ein.

Die Menge an Lösemitteln richtet sich danach, wieviel notwendig ist, um eine für das jeweilige Auftragsverfahren geeignete Lösungsviskosität einzustellen. In der Regel verwendet man 10 bis 900 Gew.%, bezogen auf die Summe der Gewichte von Copolymerisat (A) und Verbindung (B), bevorzugt 20 bis 200, insbesondere 25 bis 150 Gew.%.

Die erfindungsgemäßen Mittel können in an sich bekannter Weise modifiziert und/oder konfektioniert werden, wobei z.B. übliche klebrig-machende Harze, wie Kohlenwasserstoffharze, gegebenenfalls modifizierte Kolophoniumharze, Terpenphenolharze, Ketonharze, Aldehydharze, Kumaron-Inden-Harze, Weichmacher auf Basis von Mono-, Di- oder Polyesterverbindungen, polychlorierten Kohlenwasserstoffen, oder Paraffinölen, Farbstoffe, Pigmente, Stabili satoren oder andere Stoffe mit klebenden Eigenschaften, z.B. Natur- óder Synthesekautschuk, Polyvinylether, Polybutadienöle oder andere Haftklebebindemittel zugegeben werden können.

Die neuen Mittel eignen sich als Lösungen, Dispersionen oder Schmelzen zur Herstellung von Überzügen, Beschichtungen und Imprägnierungen, insbesondere zur Herstellung von Haftklebern, -folien und -etiketten sowie Prägezangenfolien.

Dabei können die Mittel, z.B. die Copolymerisat-Lösungen in an sich üblicher Weise durch Streichen, Spritzen, Walzen, Rakeln oder Gießen auf die üblichen flächigen Substrate aufgebracht werden, beispielsweise auf Papier, Pappe, Zellstoff, Holz, Metalle oder Folien, z.B. auf gegebenenfalls weichgemachtem PVC, Polyethylen, Polypropylen, Polyamid, Polyethylenglykolterephthalat oder Aluminium.

Von den frisch hergestellten Überzügen, Imprägnierungen oder Beschichtungen können die Lösungsmittel leicht, gegebenenfalls bei Raumtemperatur oder wenig erhöhten Temperaturen, im allgemeinen bei Temperaturen von 20 bis 150 °C, vorzugsweise von 50 bis 80 °C abgedampft werden. Die Überzüge, Beschichtungen und Imprägnierungen können in an sich üblicher Weise unter Verwendung von z.B. Heizstrahlern oder Warmluftwälzvorrichtungen getrocknet werden.

Die getrockneten oder vorgetrockneten Überzüge, Beschichtungen und Imprägnierungen werden anschließend durch Bestrahlen mit ultraviolettem Licht unter Inertgasatmosphäre oder Luftsauerstoffatmosphäre vernetzt, wobei man gut klebende Überzüge erhält, die eine hohe Kohäsion und eine gute Schälfestigkeit bei vorzüglicher Alterungsbeständigkeit aufweisen. Die Bestrahlung kann in an sich üblicher Weise mit dem Licht gebräuchlichen UV-Strahlern, z.B. Hg-Nieder-, Hg-Mittel- und Hg-Hochdrucklampen unterschiedlicher Leistung erfolgen, z.B. die Bestrahlung der beschichteten Substrate mit Quecksilbermitteldruckstrahlern mit Leistungen von z.B. 80 W/cm oder 100 W/cm. Lampen mit einer höheren Leistung ermöglichen im allgemeinen eine schnellere Vernetzung. Je nach Geschwindigkeit, mit der das beschichtete Substrat die UV-Anlage durchläuft, arbeiten ein, zwei oder mehr Lampen in einer Anlage. Bei der Bestrahlung von aus wäßriger Dispersion oder Lösung applizierter Beschichtungen, Überzügen und Imprägnierungen, kann die anteilige IR-Strahlung zur Trocknung verwendet werden.

Nach dem erfindungsgemäßen Verfahren lassen sich die beschichteten Substrate mit ultraviolettem Licht unter Luftsauerstoffatmosphäre vernetzen; die Bestrahlung unter Inertgasatmosphäre, wie Stickstoff und Kohlendioxid, ist zur Erzielung gut klebender Überzüge, die eine hohe Kohäsion und eine gute Schälfestigkeit bei vorzüglicher Alterungsbeständigkeit aufweisen, nicht in jedem Fall erforderlich.

Für einen qualitativen Vernetzungstest werden von der bestrahlten Folie Streifen von 5 cm Breite 24 Stunden in Toluol gelagert und mit einer gleichbehandelten unbestrahlten Probe verglichen. Nach der

EP 0 339 522 A2

Lagerung wird auf ungelöste Anteile untersucht.

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat mit erfindungsgemäßen Miteln (z.B. Lösungen) derart beschichtet, daß sich eine Trockenschichtdicke von 25 μm ergibt. Die Lösungsmittel werden 1 Minute bei 70°C und 1 bar abgedampft. Die beschichteten und getrockneten Folien werden mit dem Licht von Quecksilber-Mitteldrucklampen bestrahlt. Die Bestrahlung erfolgte mit zwei hintereinanderangeordneten Quecksilbermitteldrucklampen mit einer Leistung von jeweils 80 Watt/cm. Die beschichteten und getrockneten Folien wurden auf ein laufendes Endlosband gelegt, so daß die beschichteten Folien in einem Abstand von 10 cm mit einer Geschwindigkeit von 10 m/min unter den Lampen hindurch liefen. Die Bestrahlung erfolgte sowohl unter Luftsauerstoff- als auch unter Inertgasatmosphäre. Die so hergestellten Folien werden in 2 cm breite Streifen geschnitten und diese Streifen auf eine verchromte Messingplatte aufgebracht. Die Platte wird dann mit den Streifen 24 Stunden bei 23°C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 45 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C durchgeführt. Alle Messungen werden 3fach gemacht.

Die Bestimmung der K-Werte erfolgte nach DIN 53 726 in 1 %iger Lösung in Tetrahydrofuran bei 25°C.

Die Bestimmung des Staudinger-Index der Copolymerisate erfolgte nach üblichen Methoden (s. z.B. B. Volmert, Grundriß der Makromolekularen Chemie, Karlsruhe 1982, Bd. III, S. 55 ff) in Tetrahydrofuran bei 25°C. Die Dimension ist 100 ml/g.

Beispiele

Copolymerisatlösung P1

Zu einer Mischung aus 140 g Toluol und 2,8 g Dilauroylperoxid gab man 220 g einer Mischung aus 630 g 2-Ethylhexylacrylat, 17,5 g Acrylsäure und 52,5 g Tetrahydrofurfuryl-2-acrylat und polymerisierte diese Mischung unter leichtem Rückfluß 20 Minuten an.

Im Verlauf von 2 Stunden gab man den Rest der Monomermischung und gleichzeitig eine Mischung von 10,5 g Dilauroylperoxid und 50 g Toluol bei leichtem Rückfluß hinzu und rührte nach beendeter Zugabe noch 4 Stunden unter Rückfluß.

Man erhielt die farblose klare Lösung eines Copolymerisats P1 mit einem K-Wert von 24. Das vom Lösungmsittel befreite Copolymerisat hatte bei 80°C eine Schmelzviskosität von 10 Pas.

Copolymerisat P2

In einen Autoklaven legte man 1,0 g Dilauroylperoxid vor und preßte mit Stickstoff ab. Anschließend gab man 200 g einer Mischung aus 450 g 2-Ethylhexylacrylat, 12,5 g Acrylsäure und 37,5 g Tetrahydrofurfuryl-2-acrylat hinzu und polymerisierte bei einer Außentemperatur von 100°C unter einem Stickstoffdruck von 28 bar an. Im Verlauf von 3 Stunden gab man 7,5 g Dilauroylperoxid und den Rest der Monomermischung hinzu. Man hielt anschließend noch 4 Stunden bei 100 bis 120°C.

Die erhaltene Polymerschmelze führte man einem Fallfilmverdampfer zu und entgaste bei 120°C im Hochvakuum.

Man erhielt ein Copolymerisat mit einem K-Wert von 38. Die Schmelzviskosität bei 80°C betrug 16,5 Pas.

Copolymerisat P3

6

Zu einer Mischung aus 140 g Benzin, 150 mg 4,4'-Azobisisobutyronitril und 160 g einer Monomermischung aus 385 g 2-Ethylhexylacrylat, 40 g Tetrahydrofurfuryl-2-acrylat, 40 g Acrylsäure und 15 g Methylmethacrylat gab man unter Rückfluß im Verlauf von 2 Stunden den Rest der Monomermischung. Man rührte noch 2 Stunden nach und gab dann innerhalb von 30 Minuten eine Mischung von 7,5 g Dilauroylperoxid in 25 g Toluol hinzu und rührte noch 4 Stunden unter schwachem Rückfluß. Anschließend verdünnte man mit 168 g Benzin eines Siedebereichs von 60 bis 95° C.

Man erhielt die klare Lösung eines Copolymerisats mit einem K-Wert von 56. Das vom Lösungsmittel befreite Copolymerisat hatte bei 80° C eine Schmelzviskosität von 90 Pas.

Copolymerisat P4

Man verfuhr wie bei Copolymerisat P3, ersetzte jedoch 15 g 2-Ethylhexylacrylat durch 15 g einer Mischung aus 5 g 4-tert.-Butylcyclohexylacrylat und 10 g 2-N-Morpholinoethylmethacrylat.

Das Copolymerisat hatte einen K-Wert von 61.

Copolymerisat P5

Man verfuhr wie bei Copolymerisat P3, erhöhte die Initiatormenge jedoch auf 200 mg 4,4'-Azobisisobutyronitril und ersetzte 85 g 2-Ethylhexylacrylat durch die gleiche Menge iso-Butylacrylat und 20 g Tetrahydrofurfuryl-2-acrylat durch 20 g Tetrahydrofurfuryl-2-methacrylat.

Man erhielt die Lösung eines Copolymerisats P4.

Copolymerisat P6

Man polymerisierte eine Mischung aus 30 g n-Butylacrylat, 7,5 g Methacrylsäure, 2,0 g Acrylsäure, 5,0 g Tetrahydrofurfuryl-2-acrylat, 5 g Isobornylacrylat und 25 g Ethylacrylat und 25 g Methylmethacrylat unter Zusatz von Dilauroylperoxid in Toluol.

Man erhielt ein Copolymerisat von K-Wert 30.

Für die Durchführung der labormäßigen Vernetzungstests wurden die Copolymerisate mit den entsprechenden Mengen Keton vermischt.

Tabelle 1

| Ergebnisse der labormäßigen Vernetzungstests von Mischungen der Copolymerisate mit aromatischen Ketonen. Auftragsschichtdicke nach Trocknung 25 μm. | | | | | |
|---|---|---|---|---|---|
| Mischung | Copolymerisat | Keton [Gew.%] | | Benotung (nach Toluollagerung) | |
| | | | | Glasplatte | Polypropylenfolie (40 μm) |
| M1 | P1 | 0,0 | Benzophenon | 0 | 0 |
| M2 | P1 | 0,125 | Benzophenon | 1 | 1 |
| M3 | P1 | 1,0 | Benzophenon | 3 | 3 |
| M4 | P2 | 0,0 | Xanthon | 0 | 0 |
| M5 | P2 | 0,1 | Xanthon | 2 | 2 |
| M6 | P2 | 1,5 | Xanthon | 3 | 3 |
| M7 | P3 | 0,110 | Benzophenon | 3 | 3 |
| M8 | P3 | 0,200 | Benzophenon | 3 | 3 |
| M9 | P6 | 0,500 | 4-Hydroxibenzophenon | 3 | 3 |
| Benotung: | | | | | |
| 0: nicht vernetzt, Beschichtung wird vollständig abgelöst, | | | | | |
| 1: anvernetzt, Beschichtung quillt stark an, | | | | | |
| 2: gut vernetzt, Beschichtung quillt leicht an, | | | | | |
| 3: sehr gut vernetzt, Beschichtung quillt kaum an. | | | | | |

Tabelle 2

| Ergebnisse der Bestrahlungsversuche unter Luftsauerstoffatmosphäre | | | |
|---|---|---|---|
| Mischung | Kohäsion [h] | | Schälfestigkeit (nach 24 h) [N/2 cm] |
| | bei 23 °C | bei 50 °C | |
| M1 | < 0,1 | < 0,1 | nicht gemessen |
| M3 | > 30 | > 5 | 8,5 |
| M4 | < 0,1 | < 0,1 | nicht gemessen |
| M6 | > 30 | > 10 | 6,0 |
| M8 | > 90 | > 30 | 8,0 |

**Ansprüche**

1. Mit ultravioletter Strahlung vernetzbare Zusammensetzung zur Herstellung von Überzügen, insbesondere von Haftklebebeschichtungen, enthaltend

A) 80 bis 99,99 Gew.% mindestens eines Copolymerisats, das 1 bis 30 Gew.% $\alpha,\beta$-monoolefinisch ungesättigter Monomerer mit alicyclischen Resten oder mit einem Fünf- oder Sechsring-Heterocyclus mit mindestens einem Sauerstoff- oder Schwefelatom einpolymerisiert enthält und

B) 0,01 bis 20 Gew.% einer photosensitiven Verbindung.

2. Zusammensetzung nach Anspruch 1, enthaltend Copolymerisate A), zu deren Herstellung Acryl- oder Methacrylsäureester oder deren Gemische verwendet werden.

3. Zusammensetzung nach einem der Ansprüche 1 oder 2, enthaltend Copolymerisate A), zu deren Herstellung 1 bis 20 Gew.% einer $\alpha,\beta$-monoolefinisch ungesättigten Säure verwendet wird.

8

4. Zusammensetzung nach einem der Ansprüche 1 bis 3, enthaltend Copolymerisate A) zu deren Herstellung α,β-monoolefinisch ungesättigte Monomere verwendet werden, die einen Tetrahydrofuran-, einen Dioxolan- oder einen Dioxanring aufweisen.

5. Zusammensetzung nach einem der Ansprüche 1 bis 4, enthaltend Copolymerisate A) zu deren Herstellung α,β-monoolefinisch ungesättigte Monomere verwendet werden, die einen Oxazolidin- oder einen Tetrahydrooxazinring aufweisen.

6. Zusammensetzung nach einem der Ansprüche 1 bis 5, enthaltend ein Copolymerisat A) mit einer Glastemperatur unter 0 °C.

7. Zusammensetzung nach einem der Ansprüche 1 bis 6, enthaltend ein Copolymerisat A) mit einem Staudinger-Index von 0,15 bis 3,0 100 ml/g.

8. Zusammensetzung nach einem der Ansprüche 1 bis 7, enthaltend Benzophenon oder ein Benzophenonderivat als photosensitive Verbindung.

9. Verwendung der Zusammensetzung gemäß einem der Ansprüche 1 bis 8 zur Herstellung von lösungsmittelfreien Haftklebebeschichtungsmitteln oder Haftklebebeschichtungsmitteln auf Basis organischer Lösungen oder wäßriger Dispersionen.

10. Ein mit einem Haftkleber beschichtetes Substrat, erhältlich unter Verwendung einer Zusammensetzung gemäß einem der Ansprüche 1 bis 8.